# EUROPÄISCHE PATENTSCHRIFT

(11) **EP 3 898 309 B1**
(45) Veröffentlichungstag und Bekanntmachung des Hinweises auf die Patenterteilung: **12.10.2022**
(21) Anmeldenummer: 19805935.4
(22) Anmeldetag: 14.11.2019
(51) Int. Cl.: B60K 37/06, B60K 35/00, H01H 3/12, H01H 13/10, H01H 13/14, H01H 13/52

(54) **TASTSCHALTER UND KRAFTFAHRZEUG MIT EINEM TASTSCHALTER**
PUSH SWITCH AND MOTOR VEHICLE HAVING A PUSH SWITCH
COMMUTATEUR À TOUCHE ET VÉHICULE AUTOMOBILE PRÉSENTANT UN COMMUTATEUR À TOUCHE

(30) Priorität: 18.12.2018 DE 102018222088
(43) Veröffentlichungstag der Anmeldung: 27.10.2021
(73) Patentinhaber: Volkswagen Aktiengesellschaft, 38440 Wolfsburg (DE)
(72) Erfinder: THRIEN, Markus, 45968 Gladbeck (DE)
(86) Internationale Anmeldenummer: PCT/EP2019/081396
(87) Internationale Veröffentlichungsnummer: WO 2020/126245

(56) Entgegenhaltungen:
- WO-A1-2015/086589
- WO-A1-2016/012277
- DE-A1-102016 123 411
- US-A1- 2013 194 210

## Beschreibung

Die vorliegende Erfindung betrifft einen Tastschalter, insbesondere einen Tastschalter, der für eine großflächige Ausführung geeignet ist. Die Erfindung betrifft weiterhin ein Kraftfahrzeug, in dem ein erfindungsgemäßer Tastschalter verbaut ist.

Im Rahmen einer modernen Innenraumgestaltung von Kraftfahrzeugen besteht zunehmend die Notwendigkeit, an unterschiedlichsten Positionen im Kraftfahrzeug verhältnismäßig große und gegebenenfalls schwere Elemente zu verbauen, die dabei gleichzeitig noch als Tastschalter dienen sollen. Beispielsweise können Tastschalter in Form von Touchscreens, Displays oder Tasten in der Mittelkonsole, dem Lenkrad, den Türen, dem Dach oder dem Armaturenbrett vorgesehen sein, bei denen die Fahrzeuginsassen durch einen Fingerdruck eine gewünschte Funktion auslösen können. Dabei ist es wünschenswert, dass die erforderlichen Betätigungskräfte unabhängig vom Druckpunkt auf der Fläche des Tastschalters im Wesentlichen gleich bleiben. Aus Kostengründen ist es zudem erstrebenswert, wenn die Tastschalter mit nur einem Sensor oder Element zur haptischen Rückmeldung auskommen.

DE 10 2007 040 604 A1 beschreibt eine Schaltvorrichtung zum Ein- bzw. Ausschalten eines Verbrauchers, insbesondere eines Motors in einem Fahrzeug. Die Schaltvorrichtung umfasst ein Gehäuse, ein Betätigungselement, ein Schaltelement und ein Display. Das Betätigungselement ist auf dem Display angeordnet. Das Schaltelement ist durch das Betätigungselement aktivierbar, wobei mittels des Schaltelements wenigstens ein Schaltsignal für eine Steuereinheit erzeugt wird. Das Schaltelement ist ein Piezoschalter, der derart angeordnet ist, dass dieser das Schaltsignal bei einem Einschieben des Betätigungselements in das Gehäuse erzeugt. Da sich das Betätigungselement relativ leicht im Gehäuse verkannten kann, ist die beschriebene Lösung nur für kleinere Tastschalter anwendbar.

CN 2 800 464 Y beschreibt einen Druckknopfschalter mit reduzierter Breite und Dicke. Ein Schalterbetätigungselement ist mit einem Hebelgelenk versehen. Das Schalterbetätigungselement ist mit einem Paar von Hebeln versehen, die mit einem Knopfteil verbunden sind. Die Hebel werden um einen Drehpunkt geschwenkt und sind einander gegenüberliegend angeordnet, wenn der Knopfteil gedrückt wird. Die zwei Hebel sind an den einander gegenüberliegenden Enden der Hebelteile biegsam miteinander verbunden. Wenn die Hebel durch Drücken des Knopfteils geschwenkt werden, dient das Hebelgelenk zum Ein- und Ausschalten eines Reed-Schalters.

DE 10 2005 049 848 A1 beschreibt eine Einrichtung zum Betätigen eines Hubkontakts an einem Lenkrad eines Kraftfahrzeugs. Die Einrichtung weist einen großflächigen Betätigungskörper auf, der federnd an einem Basisteil abgestützt ist. Zwischen dem Basisteil und dem Betätigungskörper ist ein Hebelgetriebe angeordnet, das im Wesentlichen aus drei Hebelelementen gebildet ist, die sich im Wesentlichen in einer zur Bewegungsrichtung senkrechten Ebene zueinander winkelig erstrecken, die an einem ihrer Endabschnitte mittels Gelenkelementen miteinander verbunden sind und deren anderen Enden Lagerelemente zugeordnet sind. Zwischen den Lagerelementen und den Gelenkelementen sind Stützlager angeordnet.

US 2012/0038562 A1 beschreibt ein elektronisches Gerät, das ein Gehäuse, ein berührungsempfindliches Display an einer Vorderseite des Gehäuses und einen Aktuator aufweist. Der Aktuator ist zwischen der Vorderseite und einer Rückseite des Gehäuses angeordnet und ist so konfiguriert, dass das berührungsempfindliche Display samt der Vorderseite bei Betätigung relativ zur Rückseite des Gehäuses bewegt werden. Der Aktuator umfasst mehrere Piezoscheiben. Der beschriebene Mechanismus neigt zum Verkippen und benötigt zudem mehrere Sensoren. Zudem ist die Mechanik relativ unpräzise, so dass große Spalten zum angrenzenden Gehäuse auftreten.

DE 299 18 540 U1 beschreibt einen Tastschalter für eine Computertastatur. Der Tastschalter umfasst eine Taste, einen Gummikegel, einen ersten Hebel, einen zweiten Hebel und einen Grundkörper. Der erste Hebel und der zweite Hebel sind über einen Gelenkmechanismus miteinander verbunden und können sich scherenförmig zueinander bewegen. Im Grundkörper ist ein vertiefter Aufnahmeraum ausgebildet, der unterhalb des ersten Hebels und des zweiten Hebels vorgesehen ist. Wenn die beiden Hebel mittels der Taste gelenkig nach unten bewegt werden, können diese in den Aufnahmeraum hinein sinken.

DE 11 2013 005 212 T5 beschreibt einen Tastenmechanismus für eine Computertastatur. Jede Taste umfasst eine Tastenkappen-Baugruppe, eine Stützstruktur und ein Schmetterlingsscharnier. Das Schmetterlingsscharnier umfasst zwei separate Flügel, die einander benachbart positioniert sind, so dass zwischen den zwei Flügeln eine Kavität gebildet wird. Jeder Flügel umfasst ein Paar Drehstifte und ein Paar Tastenkappen-Baugruppen-Stifte. Dabei sind die Drehstifte mit der Stützstruktur gekoppelt und die Tastenkappen-Baugruppen-Stifte mit der Tastenkappen-Baugruppe gekoppelt.

Die für Computertastaturen benutzten Lösungen können keine großen Lasten tragen, wie beispielsweise 5-Zoll-Displays. Größere Flächen fangen zudem an zu kippen, so dass bei Tasten wie der Leertaste, der Umschalttaste oder der Eingabetaste oftmals eine Verschiebung der Tasten senkrecht zur Betätigungsrichtung sichtbar ist und teils mehrere Schaltelemente benötigt werden, damit sie sicher auslösen.

DE 10 2016 123 411 A1 beschreibt eine Bedienvorrichtung zum Bedienen von zumindest einem elektrischen Gerät in einem Kraftfahrzeug, mit einem Bedienelement und mit einer Leiterplatte mit einer ersten Seite, auf welcher ein Schaltelement angeordnet ist, wobei bei einem Betätigen des Bedienelements das Schaltelement schaltbar ist, wobei die Leiterplatte zwischen dem Bedienelement und dem Schaltelement angeordnet ist, so dass die erste Seite der Leiterplatte dem Bedienelement abgewandt ist und eine der ersten Seite gegenüberliegende zweite Seite dem Bedienelement zugewandt ist, und die Bedienvorrichtung ein separates Wippelement aufweist, welches abhängig von einer Betätigung des Bedienelements durch eine dadurch initiierte Wippbewegung zur Betätigung des Schaltelements ausgebildet ist.

DE 10 2017 220 780 B3 beschreibt einen Tastschalter für ein Kraftfahrzeug. Der Tastschalter weist eine Tastenkappe, eine Grundplatte, ein Schaltelement, einen ersten Hebel und einen zweiten Hebel auf. Der erste Hebel und der zweite Hebel sind mittels je eines Drehlagers drehbar auf der Grundplatte gelagert und jeweils an einem ersten Hebelende beweglich mit der Tastenkappe verbunden. An einem zweiten Hebelende sind der erste Hebel und der zweite Hebel beweglich miteinander verbunden. Das Schaltelement ist derart an der Tastenkappe angeordnet, dass es vom zweiten Hebelende des ersten Hebels oder vom zweiten Hebelende des zweiten Hebels betätigbar ist.

Eine Herausforderung bei der Entwicklung von großformatigen Tastschaltern besteht darin, dass eine große, schwere Fläche so gelagert werden muss, dass der Tastschalter überall im Kraftfahrzeug verbaut werden kann, z.B. in der Mittelkonsole, den Türen, dem Dach oder der Armaturentafel. Zugleich sollen sich bei Betätigung des Tastschalters unabhängig vom Einbauort stets nahezu gleiche Betätigungskräfte auf der Fläche messen lassen. Insbesondere dann, wenn ein Display in den Tastschalter integriert wird, kann es je nach Einbauort durch die zusätzliche Masse des Displays zu Fehlfunktionen oder einer erschwerten Bedienbarkeit kommen.

Im statischen Fall, wenn der in DE 10 2017 220 780 B3 beschriebene Tastschalter senkrecht z.B. in eine Fahrzeugtür eingebaut wird, ist die Funktion einwandfrei. Wird der Tastschalter allerdings waagerecht z.B. in die Mittelkonsole eingebaut, so wirkt die Gravitation auf das Display und das Schaltelement kann ungewollt ausgelöst werden. Wird der Tastschalter hingegen waagerecht unter dem Dach angebracht, so wirkt die Gravitation in entgegengesetzter Richtung auf das Display. Um nun das Schaltelement auszulösen, muss das Display vom Nutzer mit angehoben werden.

Weitere Probleme können auftreten, wenn der Tastschalter im Kraftfahrzeug so verbaut ist, dass seine Betätigungsrichtung parallel zur Fahrtrichtung ist. Das Display erfährt durch Beschleunigungs- oder Bremsmanöver eine Beschleunigung, die zu Bewegungen am Display führen können. Eine vergleichbare Problematik tritt auf, wenn der Tastschalter in der Mittelkonsole oder im Dach verbaut ist und eine unebene Strecke befahren wird. Die dabei auftretenden Vibrationen setzen sich in dem relativ schwach gedämpften System bis zum Display fort. In beiden Fällen kann es zu Fehlauslösungen des Schaltelements kommen.

Bei leichten Displays oder Tastenkappen treten diese Effekte nicht in Erscheinung, da durch eine leichte Vorspannung des Systems ein Aufschwingen verhindert und das Spiel in dem System reduziert werden kann. Je nach gewünschter Auslösekraft des Tastschalters muss lediglich gewährleistet sein, dass die aufgrund der Beschleunigung auftretenden Kräfte kleiner als die Auslösekraft des Tastschalters sind.

Es ist eine Aufgabe der Erfindung, einen alternativen Aufbau eines Tastschalters aufzuzeigen, der für eine großflächige Ausführung und die Integration eines schweren Displays geeignet ist.

Diese Aufgabe wird durch einen Tastschalter mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist ein Tastschalter eine Tastenkappe, eine Grundplatte, ein Schaltelement, das durch die Tastenkappe betätigbar ist, einen ersten Hebel und einen zweiten Hebel auf, wobei der erste Hebel und der zweite Hebel mittels Lagerböcken drehbar auf der Grundplatte gelagert sind, jeweils an einem ersten Hebelende beweglich mit der Tastenkappe verbunden sind und an einem zweiten Hebelende beweglich miteinander verbunden sind, und wobei der erste Hebel und der zweite Hebel so ausgestaltet sind, dass sie einen Masseausgleich für die Tastenkappe bilden.

Die vorliegende Konstruktion ermöglicht einen sehr flachen Aufbau großer Tastschalter, die z.B. ein Display tragen können und mit geringen Auslösekräften funktionieren. Die Tastschalter sind sehr einfach aufgebaut, kostengünstig, da die beiden Hebel baugleich sein können, und gleichzeitig robust gegen Überlastung. Über die Hebelmechanik wird die bewegliche Tastenkappe in ihrer Ruhelage sehr gut in positioniert. Zudem wird ein Verdrehen der beweglichen Tastenkappe relativ zur Betätigungsrichtung effektiv unterbunden. Durch die Hebelmechanik wird zudem nur ein zentrales Schaltelement benötigt, um eine große Fläche zu einem Tastschalter zu machen. Die Konstruktion kann in jeglicher Position verbaut werden und funktioniert stets, auch bei Überkopfmontage, mit der nahezu gleichen Auslösekraft ohne weitere Abstimmung am System. Die Schaltfunktion ist unempfindlich gegen zusätzlich auftretende Beschleunigungen, unabhängig von deren Richtung. Als Schaltelement kann ein gängiges Element genutzt werden, beispielsweise eines der folgenden Elemente: eine Schnappscheibe (engl. Dome Switch), ein Piezoelement, ein Elektromagnet oder ein Vibrationselement. Die erfindungsgemäße Lösung benötigt nur ein zentrales Schaltelement für die haptische Rückmeldung. Zum Detektieren einer Kraft kann dies beispielsweise ein Dome Switch sein, wie er von Computertastaturen bekannt ist. Für eine Kraftrückkopplung (engl. Force Feedback) kann mittels eines Piezoelements oder eines Elektromagneten ein Hub der gesamten Tastenkappe entgegen der Betätigungsrichtung erzeugt werden. Für eine haptische Rückmeldung in Form einer Vibration kann das zentrale Schaltelement ein Vibrationselement sein.

Gemäß einem Aspekt der Erfindung sind die Lagerböcke so angeordnet, dass die Hebel jeweils asymmetrische Hebelarme aufweisen. Durch die Wahl der Position der Lagerung der Hebel kann der Hub der Tastenkappe festgelegt werden. Somit kann der Tastschalter konstruktiv an verschiedene Anwendungen angepasst werden. Durch die ungleich langen Hebelarme ergeben eine Reihe von Vorteilen. So können kleinere Ausgleichsgewichte genutzt werden, wodurch sich der benötigte Bauraum reduziert. Zugleich führt der Masseausgleich zur Beschleunigungskompensation nur zu einer vertretbaren Zunahme des Gewichts des Tastschalters. Als weiterer Vorteil ergibt sich eine reduzierte Auswirkung des Spiels zwischen den beweglich miteinander verbundenen Hebelenden auf die Tastenkappenabweichung in Betätigungsrichtung.

Gemäß einem Aspekt der Erfindung sind für den Masseausgleich Gewichte in oder auf den Hebeln angeordnet. Alternativ oder zusätzlich können die Hebel jeweils eine Materialanhäufung aufweisen. Die Verwendung von Gewichten hat den Vorteil, dass durch Hinzufügen oder Entfernen von Gewichten eine Anpassung an Tastenkappen mit unterschiedlichen Massen ermöglicht wird. Allerdings wird für das Montieren der Gewichte ein zusätzlicher Arbeitsschritt ermöglicht. Dieser kann entfallen, wenn für den Masseausgleich Materialanhäufungen genutzt werden, z.B. Verdickungen der Hebelarme.

Gemäß einem Aspekt der Erfindung sind die Hebel so ausgestaltet, dass ihr jeweiliger Schwerpunkt in Richtung des zweiten Hebelendes verschoben ist. In Experimenten hat sich gezeigt, dass der Massenausgleich umso besser funktioniert, je weiter die Schwerpunkte der Hebel in Richtung der Mitte des Tastschalters verschoben sind, d.h. in Richtung des jeweiligen zweiten Hebelendes. Der Schwerpunkt sollte dabei in der Betätigungsrichtung in der Mitte der Hebel liegen.

Gemäß einem Aspekt der Erfindung sind das erste Hebelende des ersten Hebels und das erste Hebelende des zweiten Hebels in Betätigungsrichtung des Tastschalters spielfrei mit der Tastenkappe verbunden. Durch die zumindest weitgehend spielfreie Verbindung wird gewährleistet, dass sich die Tastenkappe mit einer nahezu parallelen Verschiebung in Richtung der Grundplatte bewegt. Es lassen sich Abweichungen <0,1 mm in dieser Richtung realisieren. Dabei spielt es keine Rolle, an welcher Position ein Fingerdruck auf die Tastenkappe erfolgt.

Gemäß einem Aspekt der Erfindung sind das zweite Hebelende des ersten Hebels und das zweite Hebelende des zweiten Hebels mittels einer Evolventenverzahnung miteinander verbunden. Die Evolventenverzahnung stellt eine einfache und kostengünstige Lösung für eine spielfreie und kraftschlüssige Verbindung zwischen den Hebeln dar, bei der die Hebel jederzeit miteinander in Kontakt stehen. Die Evolventenverzahnung kommt ohne zusätzliche bewegliche oder verformbare Teile aus. Während der Montage müssen die Zahnungen der Hebelenden lediglich ineinandergesteckt werden, sodass eine einfache Montage gewährleistet ist.

Gemäß einem Aspekt der Erfindung sind Berührungsflächen zwischen den Hebeln und der Tastenkappe und zwischen den Hebeln und den Lagerböcken zumindest teilweise als zylindrische Rollflächen ausgestaltet. Durch das Rollen der Hebel zwischen der Tastenkappe und den Lagerblöcken der Grundplatte anstelle eines Gleitens tritt lediglich Rollreibung auf, wodurch unter anderem der Verschleiß reduziert wird. Zudem wird bei der Betätigung nahezu die gesamte Kraft auf das Schaltelement übertragen.

Gemäß einem Aspekt der Erfindung weisen die Hebel jeweils zumindest einen Mitnehmer auf, der in eine zugeordnete Aussparung der Tastenkappe oder der Lagerböcke einhakt. Auf diese Weise wird eine einfache und kostengünstige Lösung für eine spielfreie und kraftschlüssige Verbindung zwischen der Tastenkappe und den Hebeln bzw. zwischen den Lagerböcken und den Hebeln realisiert. Es werden keine aufwändigen mechanischen Gelenke benötigt.

Gemäß einem Aspekt der Erfindung weist die Grundplatte eine Stützfläche für die Hebel auf, die eine Ruheposition festlegt. Durch die Stützfläche wird eine definierte Höhenlage der Tastenkappe in der Ruheposition erzielt, was für einen oberflächenbündigen Einbau des Tastschalters vorteilhaft ist.

Gemäß einem Aspekt der Erfindung ist ein Display auf der Tastenkappe angeordnet. Das Display kann genutzt werden, um variable Inhalte auf dem Tastschalter anzuzeigen und den Tastschalter so an unterschiedliche Betriebssituationen anzupassen. Insbesondere wird auch die Möglichkeit geschaffen, große Displays mit einem haptischen Feedback zu versehen.

Besonders vorteilhaft wird ein erfindungsgemäßer Tastschalter in einem Fahrzeug, insbesondere einem Kraftfahrzeug eingesetzt. Geeignet ist ein solcher Tastschalter für praktisch alle Bedienelemente, beispielsweise im Dachbereich, in den Türen, als Lenkradtaste, für ein Navigations- oder Multimediasystem, die Bedienung der Klimaanlage, etc. Die Anwendung ist aber nicht auf den Fahrzeugbereich beschränkt, grundsätzlich ist der erfindungsgemäße Tastschalter überall dort einsetzbar, wo dünne Tasten, Displays oder Touchscreens benötigt werden und wo gleichzeitig ein haptisches Feedback gewünscht wird.

Weitere Merkmale der vorliegenden Erfindung werden aus der nachfolgenden Beschreibung und den angehängten Ansprüchen in Verbindung mit den Figuren ersichtlich.
- Fig. 1: zeigt eine vereinfachte schematische Darstellung einer Seitenansicht eines Tastschalters in einer Ruheposition;
- Fig. 2: zeigt den Tastschalter aus Fig. 1 in einer Betätigungsposition;
- Fig. 3: zeigt eine Grundplatte einer bevorzugten Ausführungsform des Tastschalters;
- Fig. 4: zeigt einen Hebel der bevorzugten Ausführungsform des Tastschalters;
- Fig. 5: zeigt die Grundplatte aus Fig. 3 mit dem montierten Hebelpaar aus Fig. 4;
- Fig. 6: zeigt eine Tastenkappe der bevorzugten Ausführungsform des Tastschalters;
- Fig. 7: zeigt ein Beispiel des vollständig zusammengebauten Tastschalters;
- Fig. 8: zeigt einen ersten Schnitt durch den Tastschalter aus Fig. 7 entlang der X-Z-Ebene;
- Fig. 9: zeigt einen zweiten Schnitt durch den Tastschalter aus Fig. 7 entlang der X-Z-Ebene;
- Fig. 10: zeigt einen dritten Schnitt durch den Tastschalter aus Fig. 7 entlang der X-Z-Ebene;
- Fig. 11: zeigt einen vierten Schnitt durch den Tastschalter aus Fig. 7 entlang der X-Z-Ebene in einer Ruheposition;
- Fig. 12: zeigt den vierten Schnitt durch den Tastschalter aus Fig. 7 entlang der X-Z-Ebene in einer Betätigungsposition; und
- Fig. 13: zeigt schematisch einen Innenraum eines Kraftfahrzeugs, in dem erfindungsgemäße Tastschalter verbaut sind.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

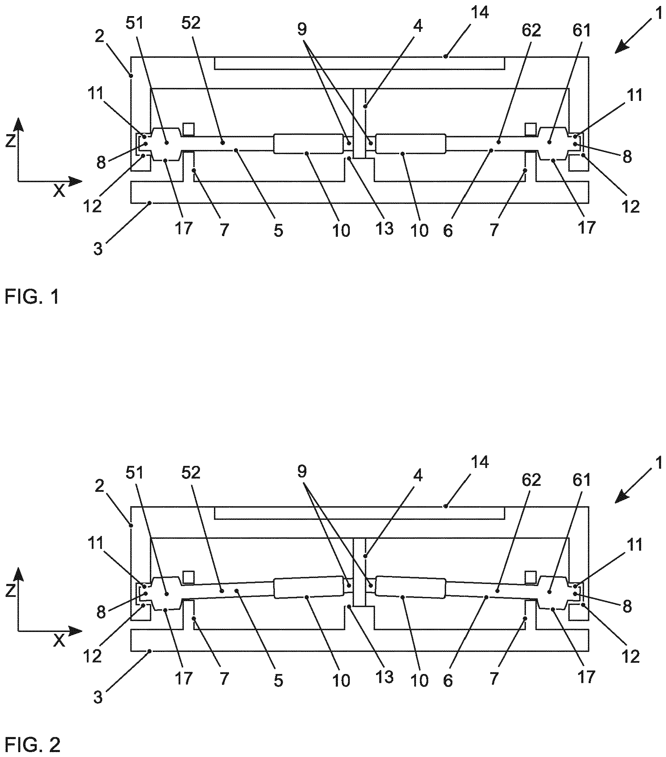

Fig. 1 zeigt eine vereinfachte schematische Darstellung einer Seitenansicht eines Tastschalters 1 in einer Ruheposition. Dargestellt ist ein Schnitt entlang der X-Z-Ebene, wobei Z die Betätigungsrichtung des Tastschalters 1 ist. Der Tastschalter 1 weist eine Tastenkappe 2, eine Grundplatte 3, ein Schaltelement 4, einen ersten Hebel 5 und einen zweiten Hebel 6 auf. In die Tastenkappe 2 ist ein Display 14 eingelassen. In diesem Beispiel ist das Schaltelement 4 ein Dome-Switch. Die Tastenkappe 2 ist beweglich, wohingegen die Grundplatte 3 am Einbauort des Tastschalters 1 fixiert ist. Das Schaltelement 4 ist derart zwischen Tastenkappe 2 und Grundplatte 3 angeordnet, dass es von der Tastenkappe 2 betätigbar ist. Der beiden Hebel 5, 6 sind mittels Lagerböcken 7 in Y-Richtung drehbar auf der Grundplatte 3 gelagert. Vorzugsweise sind die beiden Hebel 5, 6 in Z- und X-Richtung fest positioniert. Die Lagerböcke 7 sind so angeordnet, dass die Hebel 5, 6 jeweils asymmetrische Hebelarme 51, 52, 61, 61 aufweisen. Die Hebel 5, 6 weisen jeweils ein Zylinderelement 17 auf und sind so beschaffen, dass das Zylinderelement 17 zwischen der Tastenkappe 2 und dem jeweiligen Lagerbock 7 rollen kann. Dabei ist die Länge der langen Hebelarme 52, 62 vorzugsweise mindestens dreimal so groß wie der Durchmesser des Zylinderelements 17.

Die bewegliche Tastenkappe 2 ist an zwei gegenüberliegenden Seiten mit jeweils einem ersten Hebelende 8 der beiden Hebel 5, 6 beweglich verbunden. Dazu weisen die Hebel 5, 6 Mitnehmer 11 auf, die die Bewegung der Tastenkappe 2 in der Z-Richtung an das Zylinderelement 17 weitergeben. Die Mitnehmer 11 greifen zu diesem Zweck in korrespondierende Aussparungen 12 der Tastenkappe 2 ein. Die Aussparungen 12 sind dabei so gestaltet, dass in Z-Richtung kaum Spiel vorhanden ist. Die Zylinderelemente 17 weisen auf der gegenüberliegenden Seite ebenfalls Mitnehmer auf (hier nicht zu sehen), die in die Lagerböcke 7 eingreifen. An einem zweiten Hebelende 9 sind der erste Hebel 5 und der zweite Hebel 6 beweglich miteinander verzahnt, sodass eine Rotationsbewegung von einem Hebel auf den anderen übertragen wird. Vorzugsweise ist diese Verbindung in Z-Richtung spielfrei, z.B. durch Nutzung einer Evolventenverzahnung. Die Zylinderelemente 17 an den kurzen Hebelarmen 51, 61 sorgen dafür, dass die Tastenkappe 2 in einem definierten Abstand zu den Lagerböcken 7 bewegt wird und an den senkrechten Flächen der Lagerböcke 7 abrollen kann. Somit entsteht nur Rollreibung.

Die beiden Hebel 5, 6 weisen Gewichte 10 auf, die in oder auf den Hebeln 5, 6 angeordnet sind. Alternativ oder zusätzlich können die Gewichte 10 auch in Form einer Materialanhäufung in den Hebeln 5, 6 realisiert sein, z.B. in Form einer Verdickung. Die Gewichte 10 sind so gewählt, dass die Hebel 5, 6 ohne jegliche Betätigungskraft auf die bewegliche Tastenkappe 2 nahezu parallel zur Tastenkappe 2 angeordnet sind. Abweichungen in der Größenordnung von ca. 2° zur Grundplatte 3 sind dabei akzeptabel, da das gesamte System vom Schaltelement 4 mit ca. 0,2 N vorgespannt wird und somit die Hebel 5, 6 auf eine Stützfläche 13 gepresst werden. Die Vorspannung kann bei einem Dome-Switch z.B. dadurch realisiert werden, dass ein Silikonelement des Dome-Switches komprimiert wird.

Abhängig vom gewählten Spiel der Hebel 5, 6 und der Tastenkappe 2 untereinander wird die Tastenkappe 2 in ihrer Ruhelage durch die Hebelmechanik sehr gut in X und Y positioniert. Gleichzeitig verhindert die Konstruktion weitgehend ein Verdrehen der Tastenkappe 2 um die Z-Achse. Die Hebel 5, 6 dienen hier nur zur Aufhängung und Führung sowie zum Masseausgleich der Tastenkappe 2.

Fig. 2 zeigt den Tastschalter aus Fig. 1 in einer Betätigungsposition. Wird die Tastenkappe 2 als Reaktion auf eine Betätigungskraft in Richtung Grundplatte 3 bewegt, so rollen die Zylinderelemente 17 an den Hebeln 5, 6 in Richtung Grundplatte 3. Gleichzeitig werden die Hebel 5, 6 durch die Abwärtsbewegung der Tastenkappe in Rotation versetzt, d.h. die miteinander verzahnten Hebelenden 9 und die Gewichte 10 bewegen sich in Richtung der Tastenkappe 2. Die Verzahnung der Hebel 5, 6 sorgt zusammen mit der weitgehend spielfreien Lagerung dafür, dass sich die Tastenkappe 2 mit einer nahezu parallelen Verschiebung in Z-Richtung relativ zur Grundplatte 3 bewegt, unabhängig davon, an welcher Position in X und Y ein Fingerdruck auf die Tastenkappe 2 erfolgt. Wenn die Winkel der Hebelrotation klein genug gewählt wurden, vorzugsweise kleiner als 10°, heben sich die Drehmomente dabei praktisch auf. Zudem erhöhen dann auch die am Hebelsystem angeordneten Gewichte 10 die erforderliche Kraft zum Betätigen des Schaltelements 4 nur geringfügig. Das Schaltelement 4 wird bei steigender Betätigungskraft des Nutzers zwischen der Tastenkappe 2 und der Grundplatte 3 zunehmend komprimiert. Es kollabiert schließlich, wenn seine Auslösekraft erreicht wurde, sodass der Kontakt geschlossen wird. Die Auslösekraft kann beispielsweise im Bereich zwischen 2 N und 6 N liegen.

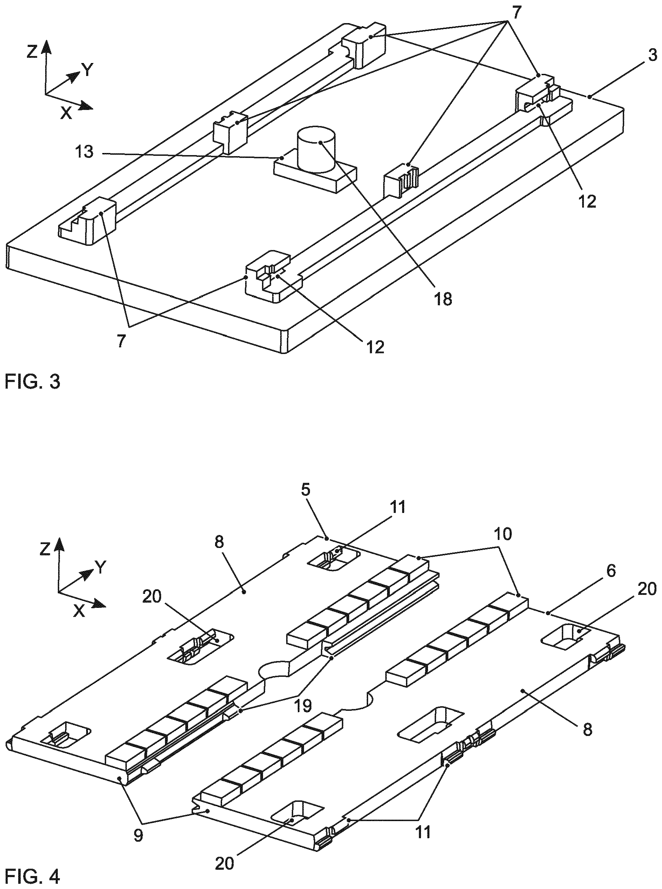

Nachfolgend sollen Ausführungsformen der Erfindung anhand der Figuren 3 bis 13 näher beschrieben werden.

Fig. 3 zeigt eine Grundplatte 3 einer bevorzugten Ausführungsform des Tastschalters. Ebenfalls dargestellt ist das verwendete Koordinatensystem. In dieser Ausführungsform sind für jeden Hebel drei Lagerböcke 7 vorgesehen. Die Lagerböcke 7 sind so gestaltet, dass Aussparungen 12 für Mitnehmer der Hebel gebildet werden. Ebenfalls dargestellt sind eine zentral angeordnete Supportfläche 18 für das Schaltelement sowie Stützflächen 13 für die beiden Hebel. Die Stützflächen 13 definieren eine Ruheposition.

Fig. 4 zeigt ein Hebelpaar der bevorzugten Ausführungsform des Tastschalters. In dieser Ausführungsform sind der erste Hebel 5 und der zweite Hebel 6 baugleich, wodurch sich Herstellungskosten einsparen lassen. Die Hebel 5, 6 weisen an einem ersten Hebelende 8 Mitnehmer 11 auf, die im zusammengebauten Zustand des Tastschalters mit korrespondierenden Aussparungen der Tastenkappe zusammenwirken und so die bewegliche Verbindung zur Tastenkappe herstellen. An einem zweiten Hebelende 9 weisen die Hebel 5, 6 eine Zahnung 19 auf, mittels derer die bewegliche, spielfreie Verbindung zwischen den Hebeln 5, 6 realisiert wird. Auf den Hebeln 5, 6 sind Gewichte 10 befestigt, beispielsweise aus Metall. Diese können z.B. mit den Hebeln 5, 6 verschraubt oder verklebt sein. Die Hebel 5, 6 weisen Öffnungen 20 auf, in die die Lagerböcke eingreifen. Auch in den Öffnungen 20 sind Mitnehmer 11 angeordnet. Diese wirken im zusammengebauten Zustand des Tastschalters mit den Lagerböcken zusammen. Die Mitnehmer 11 haben zylindrische Oberflächen, damit die Mitnehmer 11 zwischen der Tastenkappe und den Lagerblöcken rollen können.

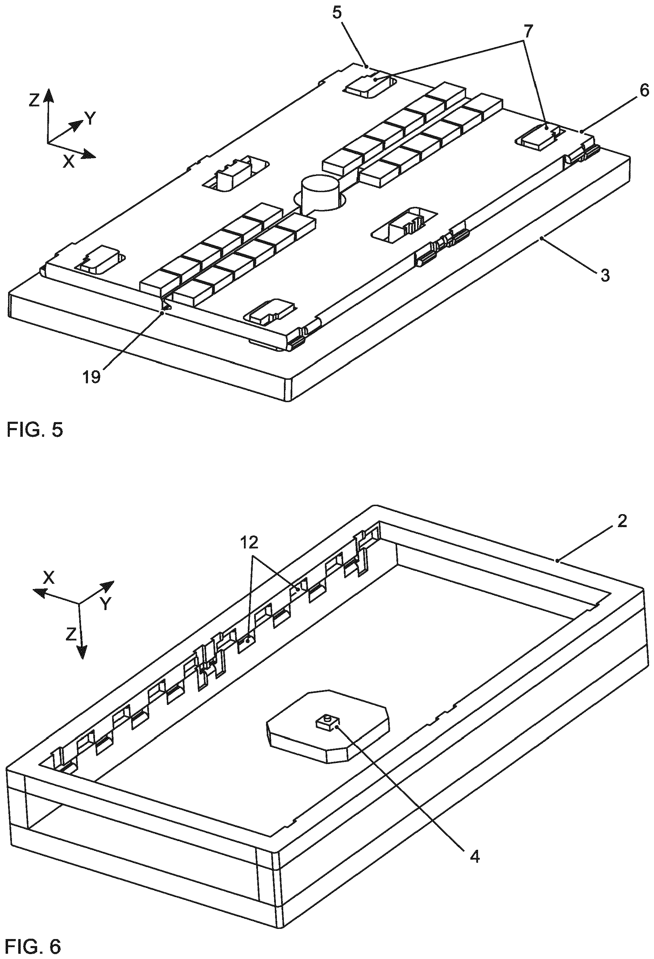

Fig. 5 zeigt die Grundplatte 3 aus Fig. 3 mit dem montierten Hebelpaar aus Fig. 4. Die Hebel 5, 6 liegen auf den Lagerböcken 7 auf und werden durch die Mitnehmer in den Aussparungen der Lageböcke 7 gehalten. Zudem greifen die Zahnungen 19 der beiden Hebel 5, 6 ineinander, so dass eine kraftschlüssige, bewegliche Verbindung zwischen den Hebeln 5, 6 existiert.

Fig. 6 zeigt eine Tastenkappe 2 der bevorzugten Ausführungsform des Tastschalters. Dabei ist die Tastenkappe 2 in einer Ansicht von unten dargestellt, d.h. die Tastenkappe 2 wurde um 180° um die Y-Achse gedreht. An den lagen Kanten der Tastenkappe 2 sind Aussparungen 12 angeordnet, die mit den Mitnehmern am jeweiligen ersten Hebelende der Hebel zusammenwirken und eine bewegliche Verbindung zu den Hebeln herstellen. Weiterhin ist im Inneren der Tastenkappe 2 mittig das Schaltelement 4 angeordnet.

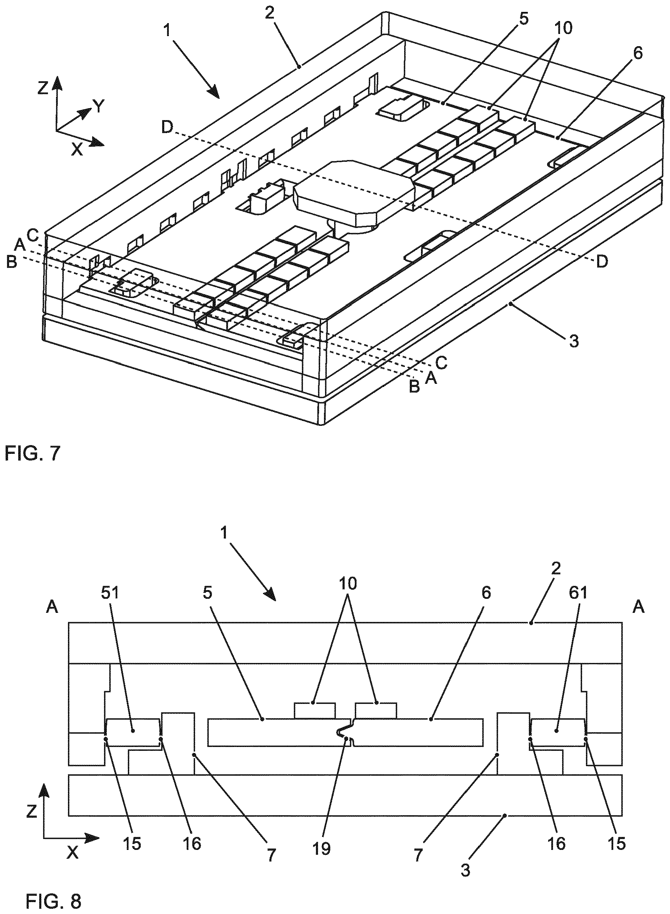

Fig. 7 zeigt ein Beispiel des vollständig zusammengebauten Tastschalters 1. In diesem Beispiel ist die Tastenkappe 2 transparent dargestellt. Im zusammengebauten Zustand hat der Tastschalter 1 eine Breite von 135 mm in X-Richtung, eine Tiefe von 250 mm in Y-Richtung und eine Höhe in Ruhestellung von 47,5 mm in Z-Richtung. Die Höhe in Z-Richtung für den Hebelmechanismus nimmt dabei ca. 6 mm in Anspruch bei einem Hub der Tastenkappe 2 von ~0,5 mm. Bei einem Gesamtgewicht des Tastschalters 1 von 1700 g beträgt das Gewicht der Tastenkappe 770 g. Auf jedem Hebel 5, 6 sind dabei zwölf Gewichte 10 zu je 5 angeordnet. In der Figur sind zudem vier Schnittebenen A-A, B-B, C-C und D-D markiert, die in Fig. 8 bis Fig. 12 dargestellt sind.

Fig. 8 zeigt einen ersten Schnitt durch den Tastschalter 1 aus Fig. 7 entlang der X-Z-Ebene im Bereich der Schnittebene A-A. In der gezeigten Darstellung verläuft der Schnitt in etwa mittig durch die vorderen Lagerböcke 7. Gut zu sehen ist die zylindrische Ausgestaltung der kurzen Hebelarme 51, 61. Die resultierenden zylindrischen Laufflächen an den Hebeln 5, 6 rollen entlang der Berührungsflächen 15 mit der Tastenkappe 2 und entlang der Berührungsflächen 16 mit den Lagerblöcken 7 der Grundplatte 3. Diese zylindrischen Laufflächen sind in allen vier Ecken der Konstruktion vorhanden. Die als Evolventenverzahnung ausgebildeten Zahnungen 19 der beiden Hebel 5, 6 greifen ineinander und formen so eine bewegliche, kraftschlüssige Verbindung zwischen den Hebeln 5, 6. Diese sorgt dafür, dass die Tastenkappe 2 bei Betätigung nicht kippen kann.

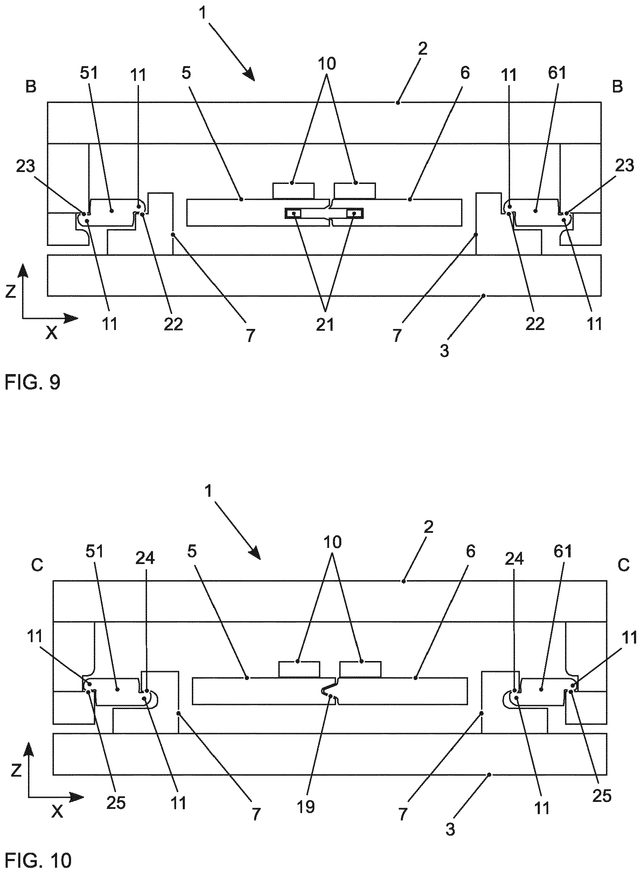

Fig. 9 zeigt einen zweiten Schnitt durch den Tastschalter 1 aus Fig. 7 entlang der X-Z-Ebene im Bereich der Schnittebene B-B. In der gezeigten Darstellung verläuft der Schnitt in etwa durch das vordere Drittel der vorderen Lagerböcke 7. Die beiden Hebel 5, 6 liegen nahe den zylindrischen Rollflächen mit ihren inneren Mitnehmern 11 auf unteren Auflageflächen 22 der Lagerblöcke 7. Die Tastenkappe 2 liegt nahe den zylindrischen Rollflächen am Hebel 5, 6 mit oberen Auflageflächen 23 auf den äußeren Mitnehmern 11 der Hebel 5, 6. Die inneren und äußeren Mitnehmer 11 sind an allen zylindrischen Laufflächen der Konstruktion vorhanden. Die Gewichte 10 sind so gewählt und positioniert, dass das Gewicht der Tastenkappe 2 über die Hebel 5, 6 ausgeglichen wird und sich das System nahezu im Gleichgewicht befindet. Der Schwerpunkt 21 in Z-Richtung sollte dabei in etwa in der Mitte der Hebel 5, 6 liegen.

Fig. 10 zeigt einen dritten Schnitt durch den Tastschalter 1 aus Fig. 7 entlang der X-Z-Ebene im Bereich der Schnittebene C-C. In der gezeigten Darstellung verläuft der Schnitt in etwa durch das hintere Drittel der vorderen Lagerböcke 7. Die inneren Mitnehmer 11 der Hebel 5, 6 haken nahe den zylindrischen Rollflächen unter obere Auflageflächen 24 der Lagerböcke 7. Die äußeren Mitnehmer 11 der Hebel 5, 6 liegen nahe den zylindrischen Rollflächen auf unteren Auflageflächen 25 der Tastenkappe 2. Die inneren und äußeren Mitnehmer 11 sind an allen zylindrischen Laufflächen der Konstruktion vorhanden. Im Vergleich zum in Fig. 9 dargestellten Schnitt B-B greifen die Mitnehmer 11 hier genau entgegengesetzt ein.

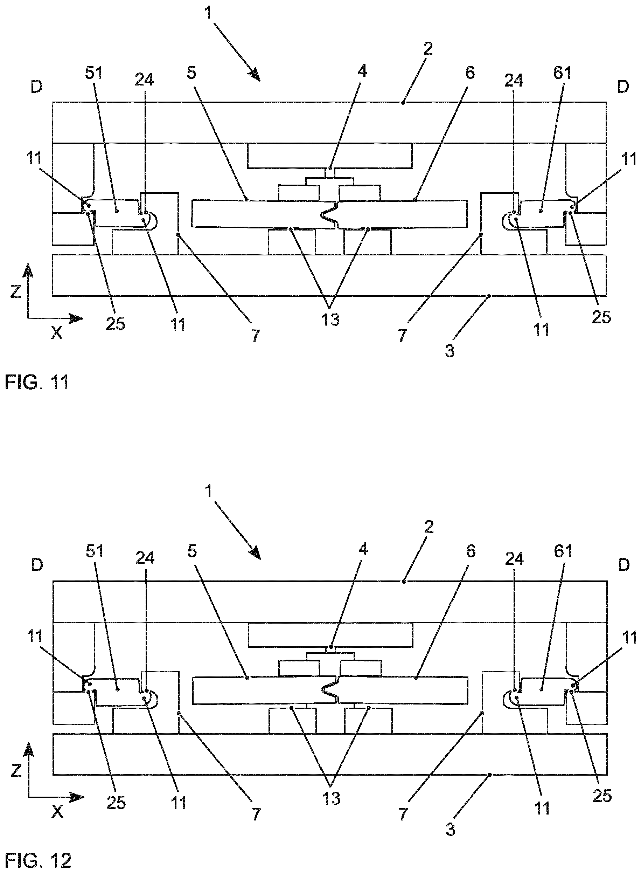

Fig. 11 zeigt einen vierten Schnitt durch den Tastschalter 1 aus Fig. 7 entlang der X-Z-Ebene im Bereich der Schnittebene D-D. In der gezeigten Darstellung verläuft der Schnitt mittig durch das Schaltelement 4. Dargestellt ist der Tastschalter 1 in einer Ruheposition. Die inneren Mitnehmer 11 der Hebel 5, 6 haken nahe den zylindrischen Rollflächen unter obere Auflageflächen 24 der Lagerböcke 7. Die äußeren Mitnehmer 11 der Hebel 5, 6 liegen nahe den zylindrischen Rollflächen auf unteren Auflageflächen 25 der Tastenkappe 2. Die Tastenkappe 2 ruht auf den Hebeln 5, 6. Die Hebel 5, 6 liegen nicht exakt waagerecht, sondern in einem Winkel von ca. -1°. Sie liegen auf den Stützflächen 13 auf. Das Silikon des Schaltelements 4 ist um 0,1 mm komprimiert, wodurch das das System vorgespannt wird.

Fig. 12 zeigt den vierten Schnitt durch den Tastschalter 1 aus Fig. 7 entlang der X-Z-Ebene in einer Betätigungsposition. Die Tastenkappe 2 wurde gedrückt und 0,5 mm in Richtung der Grundplatte 3 bewegt. Die langen Hebelarme 52, 62 haben sich in Richtung der Tastenkappe 2 bewegt. Diese wurde durch die Hebel 5, 6 dabei nahezu parallel geführt. In der Betätigungsposition liegen die Hebel 5, 6 ebenfalls nicht waagerecht, sondern in einem Winkel von ca. 1°. Während der Betätigung wird das Silikon des Schaltelements 4 zwischen der Tastenkappe 2 und der Supportfläche 18 der Grundplatte 3 um ca. 0,5 mm komprimiert. Der Dome im Switch kollabiert dabei.

Wenn der Druck auf die Tastenkappe 2 nachlässt, entspannt sich das Silikon wieder und der Dome Switch spring zurück in seine Ausgangsposition. Es ist daher keine weitere Feder zur Rückstellung der Tastenkappe 2 nötig. Hauptsachlich verantwortlich dafür sind der Masseausgleich durch die Hebel 5, 6 und die Gewichte 10, der das Gewicht der Tastenkappe kompensiert, und das Rollendesign der Zylinderelemente an den Hebeln 5, 6, die die Reibung im System stark reduzieren.

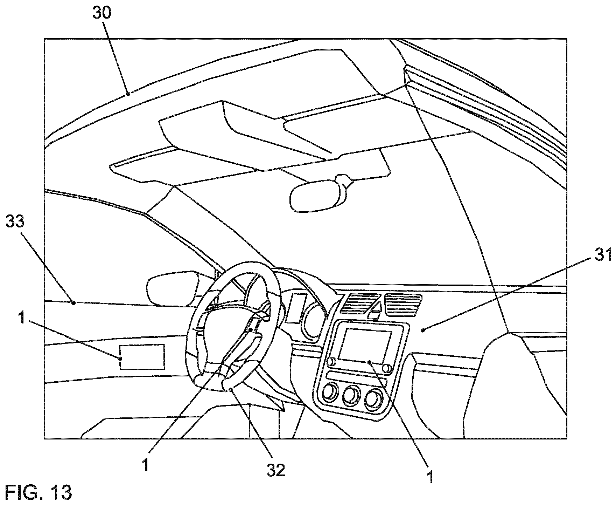

Fig. 13 zeigt schematisch einen Innenraum eines Kraftfahrzeugs 30, in dem erfindungsgemäße Tastschalter 1 verbaut sind. Ein erster Tastschalter 1 mit Display 14 ist in einem Armaturenbrett 31 des Kraftfahrzeugs 30 angeordnet, beispielsweise zur Bedienung eines Infotainment-Systems. Ein weiterer, erheblich kleinerer Tastschalter 1 ist im Lenkrad 32 verbaut. Mit seiner Hilfe kann beispielsweise die Bedienung einer Freisprecheinrichtung oder die Steuerung eines Tempomaten erfolgen. Ein dritter Tastschalter 1 ist in der Tür 33 der Fahrerseite angeordnet. Mit diesem Tastschalter 1 kann z.B. das Öffnen der Tür 33 veranlasst werden, wobei gegebenenfalls auf einem Display des Tastschalters 1 ein Hinweis eingeblendet werden kann, wenn durch den benachbarten Verkehr eine Gefahrensituation vorliegt.

### Bezugszeichenliste

- 1: Tastschalter
- 2: Tastenkappe
- 2': Tastenkappenaufsatz
- 3: Grundplatte
- 4: Schaltelement
- 5: Erster Hebel
- 6: Zweiter Hebel
- 7: Lagerbock
- 8: Erstes Hebelende
- 9: Zweites Hebelende
- 10: Gewicht
- 11: Mitnehmer
- 12: Aussparung
- 13: Stützfläche
- 14: Display
- 15: Berührungsfläche
- 16: Berührungsfläche
- 17: Zylinderelement
- 18: Supportfläche
- 19: Zahnung
- 20: Öffnung
- 21: Schwerpunkt
- 22: Untere Auflagefläche
- 23: Obere Auflagefläche
- 24: Obere Auflagefläche
- 25: Untere Auflagefläche
- 30: Kraftfahrzeug
- 31: Armaturenbrett
- 32: Lenkrad
- 33: Tür
- 51: Kurzer Hebelarm
- 52: Langer Hebelarm
- 61: Kurzer Hebelarm
- 62: Langer Hebelarm

## Patentansprüche

1. Tastschalter (1) mit einer Tastenkappe (2), einer Grundplatte (3), einem Schaltelement (4), das durch die Tastenkappe (2) betätigbar ist, einem ersten Hebel (5) und einem zweiten Hebel (6), wobei der erste Hebel (5) und der zweite Hebel (6) jeweils an einem ersten Hebelende (8) beweglich mit der Tastenkappe (2) verbunden sind und an einem zweiten Hebelende (9) beweglich miteinander verbunden sind, **dadurch gekennzeichnet, dass** der erste Hebel (5) und der zweite Hebel (6) mittels Lagerböcken (7) drehbar auf der Grundplatte (3) gelagert sind und so ausgestaltet sind, dass sie einen Masseausgleich für die Tastenkappe (2) bilden.

2. Tastschalter (1) gemäß Anspruch 1, wobei die Lagerböcke (7) so angeordnet sind, dass die Hebel (5, 6) jeweils asymmetrische Hebelarme (51, 52, 61, 61) aufweisen.

3. Tastschalter (1) gemäß Anspruch 1, wobei für den Masseausgleich Gewichte (10) in oder auf den Hebeln (5, 6) angeordnet sind oder die Hebel (5, 6) jeweils eine Materialanhäufung aufweisen.

4. Tastschalter (1) gemäß einem der vorherigen Ansprüche, wobei die Hebel (5, 6) so ausgestaltet sind, dass ihr jeweiliger Schwerpunkt in Richtung des zweiten Hebelendes (9) verschoben ist.

5. Tastschalter (1) gemäß einem der vorherigen Ansprüche, wobei das erste Hebelende (8) des ersten Hebels (5) und das erste Hebelende (8) des zweiten Hebels (6) in Betätigungsrichtung des Tastschalters (1) spielfrei mit der Tastenkappe (2) verbunden sind.

6. Tastschalter (1) gemäß einem der vorherigen Ansprüche, wobei das zweite Hebelende (9) des ersten Hebels (5) und das zweite Hebelende (9) des zweiten Hebels (6) mittels einer Evolventenverzahnung miteinander verbunden sind.

7. Tastschalter (1) gemäß einem der vorherigen Ansprüche, wobei Berührungsflächen (15, 16) zwischen den Hebeln (5, 6) und der Tastenkappe (2) und zwischen den Hebeln (5, 6) und den Lagerböcken (7) zumindest teilweise als zylindrische Rollflächen ausgestaltet sind.

8. Tastschalter (1) gemäß einem der vorherigen Ansprüche, wobei die Hebel (5, 6) jeweils zumindest einen Mitnehmer (11) aufweisen, der in eine zugeordnete Aussparung (12) der Tastenkappe (2) oder der Lagerböcke (7) einhakt.

9. Tastschalter (1) gemäß einem der vorherigen Ansprüche, wobei die Grundplatte (3) eine Stützfläche (13) für die Hebel (5, 6) aufweist, die eine Ruheposition festlegt.

10. Tastschalter (1) gemäß einem der vorherigen Ansprüche, wobei ein Display (14) auf der Tastenkappe (2) angeordnet ist.

11. Kraftfahrzeug (30), **dadurch gekennzeichnet, dass** das Kraftfahrzeug (30) einen Tastschalter gemäß einem der Ansprüche 1 bis 10 aufweist.

## Claims

1. Push switch (1) comprising a keycap (2); a base plate (3); a switching element (4) which can be actuated by the keycap (2); a first lever (5); and a second lever (6), wherein the first lever (5) and the second lever (6) are respectively connected to the keycap (2) so as to be movable at a first lever end (8), and are connected to one another so as to be movable at a second lever end (9), **characterized in that** the first lever (5) and the second lever (6) are mounted on the base plate (3) by means of pedestals (7) so as to be rotatable, and are designed such that they form a mass balance for the keycap (2).

2. Push switch (1) according to claim 1, wherein the pedestals (7) are arranged such that the levers (5, 6) respectively have asymmetrical lever arms (51, 52, 61, 61).

3. Push switch (1) according to claim 1, wherein, for the mass balance, weights (10) are arranged in or on the levers (5, 6), or the levers (5, 6) respectively have a material accumulation.

4. Push switch (1) according to any one of the preceding claims, wherein the levers (5, 6) are designed such that their respective center of gravity is displaced in the direction of the second lever end (9).

5. Push switch (1) according to any one of the preceding claims, wherein the first lever end (8) of the first lever (5) and the first lever end (8) of the second lever (6) are connected to the keycap (2) without play in the actuation direction of the push switch (1).

6. Push switch (1) according to any one of the preceding claims, wherein the second lever end (9) of the first lever (5) and the second lever end (9) of the second lever (6) are interconnected by means of an involute toothing.

7. Push switch (1) according to any one of the preceding claims, wherein contact surfaces (15, 16) between the levers (5, 6) and the keycap (2), and between the levers (5, 6) and the pedestals (7), are designed at least in part as cylindrical roller surfaces.

8. Push switch (1) according to any one of the preceding claims, wherein the levers (5, 6) respectively comprise at least one dog (11) which hooks into an associated recess (12) of the keycap (2) or of the pedestals (7).

9. Push switch (1) according to any one of the preceding claims, wherein the base plate (3) comprises a support surface (13) for the levers (5, 6) which establishes a rest position.

10. Push switch (1) according to any one of the preceding claims, wherein a display (14) is arranged on the keycap (2).

11. Motor vehicle (30), **characterized in that** the motor vehicle (30) comprises a push switch according to any one of claims 1 to 10.

## Revendications

1. Commutateur à touche (1) présentant une couvercle de touche (2), une plaque de base (3), un élément de commutation (4), qui peut être actionné par le couvercle de touche (2), un premier levier (5) et un deuxième levier (6), le premier levier (5) et le deuxième levier (6) étant chacun reliés au niveau d'une première extrémité de levier (8) de manière mobile au couvercle de touche (2) étant reliés de manière mobile l'un à l'autre au niveau d'une deuxième extrémité de levier (9), **caractérisé en ce que** le premier levier (5) et le deuxième levier (6) étant logés rotatifs sur la plaque de base (3) au moyen de sabots d'appui (7) et sont conçus de telle façon qu'ils forment un équilibrage des masses pour le couvercle de touche (2).

2. Commutateur à touche (1) selon la revendication 1, les sabots d'appui (7) étant disposés de telle façon que les leviers (5, 6) présentent des bras de levier (51, 52, 61, 61) asymétriques.

3. Commutateur à touche (1) selon la revendication 1, des poids (10) étant disposés dans ou sur les leviers (5, 6) pour l'équilibrage des masses ou que les leviers (5, 6) présentent respectivement une accumulation de matière.

4. Commutateur à touche (1) selon l'une quelconque des revendications précédentes, les leviers (5, 6) étant conçus de telle façon que leur centre de gravite respectif est déplacé vers la deuxième extrémité de levier (9).

5. Commutateur à effleurement (1) selon une des revendications précédentes, la première extrémité de levier (8) du premier levier (5) et la première extrémité de levier (8) du second levier (6) étant reliées sans jeu, dans la direction d'actionnement du commutateur à touche (1), avec le couvercle de touche (2).

6. Commutateur à touche (1) selon l'une quelconque des revendications précédentes, la deuxième extrémité de levier (9) du premier levier (5) et la deuxième extrémité de levier (9) du deuxième levier (6) étant reliées l'une à l'autre au moyen d'une denture à développante.

7. Commutateur à touche (1) selon l'une quelconque des revendications précédentes, des surfaces de contact (15, 16) entre les leviers (5, 6) et le couvercle de touche (2) et entre les leviers (5, 6) et les sabots d'appui (7) étant au moins partiellement réalisées sous la forme de surfaces de roulement.

8. Commutateur à touche (1) selon l'une quelconque des revendications précédentes, les leviers (5, 6) présentant respectivement au moins un entraîneur (11), qui s'accroche dans une cavité (12) du couvercle de touche (2) ou des sabots d'appui (7) associée.

9. Commutateur à touche (1) selon l'une quelconque des revendications précédentes, la plaque de base (3) présentant une surface de support (13) pour les leviers (5, 6), qui définit une position de repos.

10. Commutateur à touche (1) selon l'une quelconque des revendications précédentes, un écran (14) étant disposé sur le couvercle de touche (2).

11. Véhicule automobile (30), **caractérisé en ce que** le véhicule automobile (30) présente un commutateur à touche selon l'une quelconque des revendications 1 à 10.
